# EUROPEAN PATENT SPECIFICATION

(11) **EP 4 203 158 B1**
(45) Date of publication and mention of the grant of the patent: **05.11.2025**
(21) Application number: 22753041.7
(22) Date of filing: 08.02.2022
(51) Int. Cl.: H01M 50/242, H01M 50/24, H01M 50/249, H01M 50/211, H01M 50/291, H01M 50/293, H01M 50/258

(54) **BATTERY MODULE, BATTERY PACK, VEHICLE, AND METHOD FOR MANUFACTURING BATTERY MODULE**
BATTERIEMODUL, BATTERIEPACK, FAHRZEUG UND VERFAHREN ZUR HERSTELLUNG EINES BATTERIEMODULS
MODULE DE BATTERIE, BLOC-BATTERIE, VÉHICULE ET PROCÉDÉ DE FABRICATION DE MODULE DE BATTERIE

(30) Priority: 10.02.2021 KR 20210019347
(43) Date of publication of application: 28.06.2023
(73) Proprietor: LG Energy Solution, Ltd., Seoul 07335 (KR)
(72) Inventor: KIM, Do-Hyeon, Daejeon 34122 (KR); UM, Jae-Ho, Daejeon 34122 (KR); OH, Young-Soo, Daejeon 34122 (KR)
(74) Representative: Goddar, Heinz J.
(86) International application number: PCT/KR2022/095024
(87) International publication number: WO 2022/173281

(56) References cited:
- DE-A1- 102018 210 933
- DE-A1- 102019 110 141
- JP-A- 2010 165 597
- JP-A- 2015 191 771
- JP-A- 2020 080 214
- KR-A- 20170 135 476
- KR-A- 20180 112 630
- KR-A- 20190 091 631

## Description

### TECHNICAL FIELD

The present disclosure relates to a battery module, a battery pack, a vehicle, and a method of manufacturing the battery module, and more particularly, to a battery module in which a cycle life and durability against external impact are improved and a method of manufacturing the battery module.

The present application claims priority to Korean Patent Application No. 10-2021-0019347 filed on February 10, 2021 in the Republic of Korea.

### BACKGROUND ART

As the demand for portable electronic products such as laptops, video cameras, and mobile phones has recently rapidly increased and the development of electric vehicles, energy storage batteries, robots, satellites, etc. has begun in earnest, research on high-performance secondary batteries capable of repeated charge/discharge has been actively conducted.

Currently commercialized secondary batteries include nickel cadmium batteries, nickel hydride batteries, nickel zinc batteries, and lithium secondary batteries. Among them, lithium secondary batteries are in the spotlight because they have almost no memory effect compared to nickel-based secondary batteries, and thus have advantages of free charge/discharge, very low self-discharge rate, and high energy density.

A lithium secondary battery mainly uses a lithium-based oxide and a carbon material as a positive electrode active material and a negative electrode active material, respectively. Also, the lithium secondary battery includes an electrode assembly in which a positive electrode plate and a negative electrode plate to which the positive electrode active material and the negative electrode active material are respectively applied are located with a separator therebetween, and a casing, that is, a battery case, for sealing and accommodating the electrode assembly along with an electrolytic solution.

According to a shape of a casing, lithium secondary batteries may be classified into can-type secondary batteries in which an electrode assembly is received in a metal can, and pouch-type secondary batteries in which an electrode assembly is received in a pouch of an aluminum laminate sheet.

In the related art, in order to configure a high-capacity battery module, a plurality of pouch-type battery cells, a cell frame in which the plurality of pouch-type battery cells are accommodated, and a plurality of compression pads compressed and located between the plurality of pouch-type battery cells are used.

However, when a cell assembly is configured so that the compression pads are located between the plurality of pouch-type battery cells and the cell assembly is accommodated in an inner space of the cell frame, a force applied to hold and move the cell assembly may be different for each of the plurality of pouch-type battery cells, and due to a difference in a deviation of a pressing force, the plurality of pouch-type battery cells in the cell frame are likely to be arranged at different separation distances. Accordingly, according to positions of the plurality of pouch-type battery cells, there is a large difference in the amount of compression between the plurality of compression pads, and thus, there is a difference between the plurality of battery cells even in surface pressure applied by the compression pads to the battery cells.

Furthermore, because, when initial thicknesses of the compression pads before being located between the plurality of pouch-type battery cells are constant but intervals between the plurality of pouch-type battery cells are not constant as described above, degrees to which the plurality of compression pads are compressed are different, a deviation of surface pressure applied by the plurality of compression pads to the battery cells may be increased.

Accordingly, the battery module of the related art has a problem in that when the battery module is used for a long time and exposed to a high temperature environment, degradation occurs and, thus, the plurality of battery cells swell due to gas generated therein and a deviation of surface pressure between the plurality of battery cells is further increased. Accordingly, when surface pressure is concentrated only on some of the plurality of battery cells, the performance of the battery cells that are pressed may be rapidly degraded and a lifespan may be rapidly shortened, thereby degrading the overall charging/discharging performance of the battery module. Accordingly, the battery module in the related art has a problem in that a cycle life is greatly reduced due to a difference in surface pressure applied between the battery cells.

### DISCLOSURE

### Technical Problem

The present disclosure is designed to solve the problems of the related art, and therefore the present disclosure is directed to providing a battery module in which a cycle life and durability against external impact are improved, and a method of manufacturing the battery module.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

In an aspect of the present disclosure, there is provided a battery module including: a plurality of battery cells arranged in at least one direction and spaced apart from one another by a certain interval; a cell frame including a receiving space in which the plurality of battery cells are accommodated; and a foam member filled in at least one of between the cell frame and the plurality of battery cells and between the plurality of battery cells.

Also, the battery module further includes a guide member located on and supporting one side of the battery cell to guide an arrangement of the plurality of battery cells in the receiving space.

Furthermore, the foam member may be filled in at least one of between the cell frame and the battery cell and between the plurality of battery cells.

Furthermore, the guide member may include a plurality of guide pins each supporting at least one battery cell and extending across the receiving space of the cell frame.

Also, the guide member may include a plurality of strings each supporting at least one battery cell and extending across the receiving space of the cell frame.

Furthermore, the guide member may include an insulating film supporting the battery cell and extending across the receiving space of the cell frame.

Also, the guide member may include a mesh sheet supporting at least one battery cell and extending across the receiving space of the cell frame.

In another aspect of the present disclosure, there is provided a battery pack including at least one battery module as described above.

In another aspect of the present disclosure, there is provided a vehicle including at least one battery module as described above.

In another aspect of the present disclosure, there is provided a method of manufacturing the battery module, the method including: a preparation process of preparing a cell frame in which a plurality of guide pins of a guide member are spaced apart from one another in a receiving space in which a plurality of battery cells are accommodated; an accommodation process of accommodating the plurality of battery cells in the receiving space so that each of the plurality of battery cells is located between the plurality of guide pins; and an addition process of filling a foam member in at least one of between the cell frame and the battery cell and between the plurality of battery cells.

### Advantageous Effects

According to an aspect of the present disclosure, in a battery module of the present disclosure, because a foam member is filled in at least one of between a cell frame and a plurality of battery cells and between the plurality of battery cells, collision between the plurality of battery cells or between adjacent elements due to external impact (vibration or the like) may be effectively reduced. Furthermore, when compared to a battery module of the related art in which a plurality of compressed pad members are located between a plurality of battery cells, in the battery module using the foam member of the present disclosure, because the foam member is appropriately filled in a distance between the plurality of battery cells, a deviation of surface pressure applied to each of the plurality of battery cells may be reduced. Accordingly, in the battery module of the present disclosure, because a degree of degradation such as deterioration occurring during frequent charging/discharge may be reduced, a lifespan may be effectively extended.

In another aspect of the present disclosure, because the battery module of the present disclosure includes a guide member, an arrangement of a plurality of battery cells at regular separation distances may be easily guided. Accordingly, the manufacturing efficiency of the battery module may be effectively improved. Also, when compared to a battery module of the related art in which a plurality of compressed pad members are located between a plurality of battery cells, in the battery module using the guide member of the present disclosure, because an interval between the plurality of battery cells and an interval between the plurality of battery cells and an inner surface of a receiving space of a cell frame may be constant, a deviation of surface pressure applied by a foam member to the plurality of battery cells may be effectively reduced. Accordingly, because the battery module of the present disclosure may reduce a degree of degradation such as deterioration occurring during frequent charging/discharging, a lifespan may be effectively extended.

In another aspect of the present disclosure, in a manufacturing method of the present disclosure, because a plurality of battery cells may be arranged at regular separation distances by using a plurality of guide pins, a deviation of surface pressure applied by an injected foam member may be effectively reduced. In a battery module of the present disclosure with a reduced deviation of surface pressure applied to the battery cells manufactured by using the manufacturing method, because a degree of degradation such as deterioration occurring during frequent charging/discharging may be reduced, a lifespan of the battery module may be prevented from being rapidly shortened when a lifespan of any one of the plurality of battery cells is shortened too fast.

In another aspect of the present disclosure, in a manufacturing method of the present disclosure, because a plurality of battery cells are fixed in position by a foam member and then a plurality of guide pins supporting the plurality of battery cells are removed, a weight of a battery module may be reduced, an inner space of a cell frame may be secured, and an increase in surface pressure due to swelling of the plurality of battery cells may be reduced.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view illustrating a battery module according to Embodiment 1 of the present disclosure.
FIG. 2 is a vertical cross-sectional view illustrating the battery module of FIG. 1 taken along line C-C'.
FIG. 3 is a perspective view illustrating a plurality of battery cells of the battery module according to Embodiment 1 of the present disclosure.
FIG. 4 is a vertical cross-sectional view illustrating a battery module according to Embodiment 2 of the present disclosure.
FIG. 5 is a vertical cross-sectional view illustrating a cell frame of the battery module according to Embodiment 2 of the present disclosure.
FIG. 6 is a perspective view illustrating a guide member of the battery module according to Embodiment 2 of the present disclosure.
FIG. 7 is a vertical cross-sectional view illustrating a cell frame and a plurality of battery cells of the battery module according to Embodiment 2 of the present disclosure.
FIG. 8 is a vertical cross-sectional view illustrating a battery module according to Embodiment 3 of the present disclosure.
FIG. 9 is a vertical cross-sectional view illustrating a cell frame of the battery module according to Embodiment 3 of the present disclosure in a front-back direction.
FIG. 10 is a vertical cross-sectional view illustrating a battery module according to Embodiment 4 of the present disclosure.
FIG. 11 is a vertical cross-sectional view illustrating a cell frame of the battery module according to Embodiment 4 of the present disclosure in a front-back direction.
FIG. 12 is a vertical cross-sectional view illustrating a battery module according to Embodiment 5 of the present disclosure.
FIG. 13 is a vertical cross-sectional view illustrating a cell frame of the battery module according to Embodiment 5 of the present disclosure in a front-back direction.
FIG. 14 is a side view illustrating an appearance of a vehicle according to Embodiment 6 of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the present disclosure, so it should be understood that other equivalents and modifications could be made thereto without departing from the scope of the present disclosure.

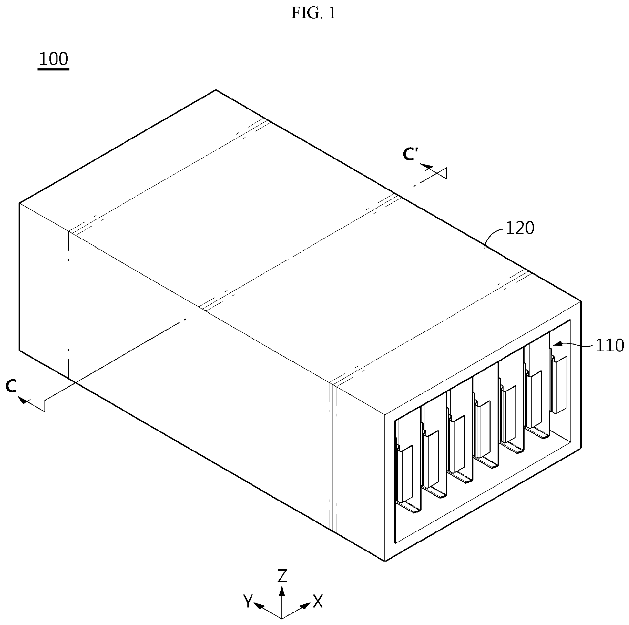

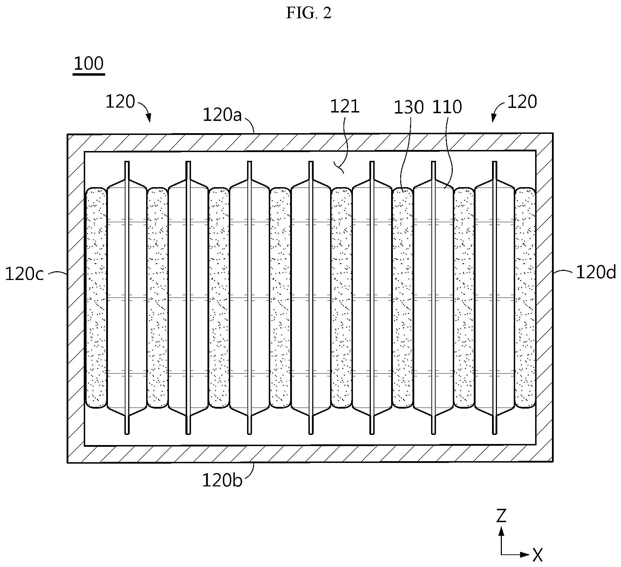

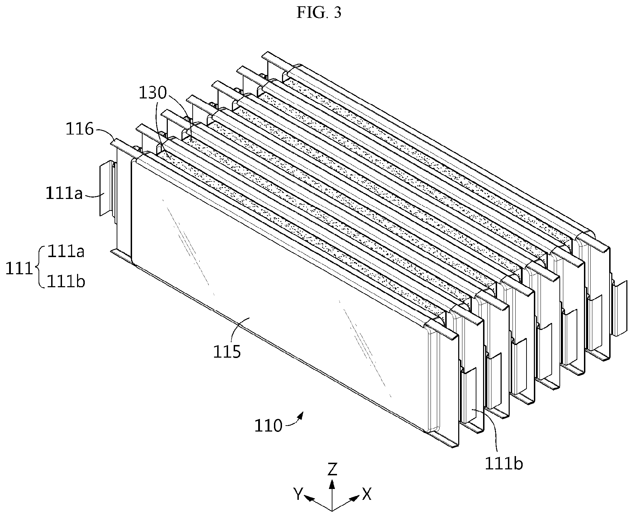

FIG. 1 is a perspective view illustrating a battery module according to Embodiment 1 of the present disclosure. FIG. 2 is a vertical cross-sectional view illustrating the battery module of FIG. 1 taken along line C-C'. FIG. 3 is a perspective view illustrating a plurality of battery cells of the battery module according to Embodiment 1 of the present disclosure. For reference, an X-axis direction, a Y-axis direction, and a Z-axis direction in FIG. 1 respectively represent a right direction, a rear direction, and an up direction.

Referring to FIGS. 1 through 3, a battery module 100 according to Embodiment 1 of the present disclosure includes a plurality of battery cells 110, a cell frame 120, and a foam member 130.

In detail, the plurality of battery cells 110 may be arranged in a left-right direction. The plurality of battery cells 110 may be spaced apart from one another by a certain interval. For example, the plurality of battery cells 110 may be spaced apart from one another by a certain distance in an arrangement direction (X-axis direction). The battery cell 110 may be a pouch-type battery cell 110 including an electrode assembly (not shown), an electrolytic solution (not shown), and a pouch 116 in which the electrode assembly and the electrolytic solution are accommodated. In particular, the pouch 116 may include a receiving portion 115 in which the electrode assembly is accommodated. The battery cell 110 may include a positive electrode terminal 111b and a negative electrode terminal 111a on both sides in a front-back direction (Y-axis direction). An outer peripheral portion of the pouch 116 may be sealed through thermal fusion.

Also, during charging/discharging, the battery cell 110 may swell due to gas generated by side reaction. That is, because the pouch 116 is flexible, the pouch 116 may swell as gas pressure inside the pouch 116 increases. However, the battery module 100 according to the present disclosure is not limited to the pouch-type battery cell 110, and any of various battery cells 110 well known at the time of filing the present application may be employed as long as the battery cell may swell when during charging/discharging or being exposed to high temperature.

Also, the battery module 100 may further include at least one bus bar (not shown) for electrically connecting the plurality of battery cells 110. In detail, the bus bar may include a conductive metal, for example, copper, aluminum, or nickel. Although not shown, a known general bus bar may be used as long as it may be electrically connected to a positive electrode lead and a negative electrode lead.

Furthermore, the cell frame 120 may include a receiving space 121 in which the plurality of battery cells 110 are accommodated. The receiving space 121 may be a rectangular parallelepiped space. The cell frame 120 may have a rectangular tube shape whose inside is empty. The cell frame 120 may include an electrically insulating material. The electrically insulating material may be, for example, polyvinyl chloride or polycarbonate. The cell frame 120 may include a first plate portion 120a that is an upper portion, a second plate portion 120b that is a lower portion, a third plate portion 120c that is a left portion, and a fourth plate portion 120d that is a right portion. The first plate portion 120a may be located over the plurality of battery cells 110. The second plate portion 120b may be located under the plurality of battery cells 110. The third plate portion 120c may be located on a left side of the plurality of battery cells 110. The fourth plate portion 120d may be located on a right side of the plurality of battery cells 110.

The foam member 130 may be filled in at least one of between the cell frame 120 and the battery cell 110, and between the plurality of battery cells 110. For example, as shown in FIG. 2, the foam member 130 may be located between the third plate portion 120c and the battery cell 110 that is located at a leftmost position from among the plurality of battery cells 110. The foam member 130 may be located between the fourth plate portion 120d and the battery cell 110 that is located at a rightmost position from among the plurality of battery cells 110. Also, the six foam members 130 may be located between the seven battery cells 110.

Furthermore, the foam member 130 may be a porous material. For example, the foam member 130 may be a polymer foam. In more detail, the foam member 130 may be a polyurethane foam. The foam member 130 may be formed by using a foamable synthetic resin as a paint. For example, to manufacture the battery module 100 of the present disclosure, a liquid foamable synthetic resin having high fluidity may be applied (injected) into the receiving space 121 of the cell frame 120 in which the plurality of battery cells 110 are accommodated. In this case, the foamable synthetic resin may be injected by using an injector including a nozzle. The production principle of the polyurethane foam is that the injected foamable synthetic resin causes a chemical reaction to enlarge molecules, swells due to generated gas to have a spherical, hemispherical, or polygonal cellular structure, and then is cured to be a polyurethane foam.

Accordingly, according to the configuration of the present disclosure, because the foam member 130 is filled in at least one of between the cell frame 120 and the plurality of battery cells 110 and between the plurality of battery cells 110, collision between the plurality of battery cells 110 or between adjacent elements due to external impact (vibration or the like) may be effectively reduced. Furthermore, when compared to the battery module of the related art in which a plurality of compressed pad members are located between the plurality of battery cells, in the battery module 100 of the present disclosure, because the foam member is appropriately filled in a distance between the plurality of battery cells, a deviation of surface pressure applied to each of the plurality of battery cells 110 may be reduced. In the battery module 100 of the present disclosure with a reduced deviation of surface pressure, a degree of degradation such as deterioration occurring during frequent charging/discharging may be reduced, and thus, a lifespan may be effectively extended.

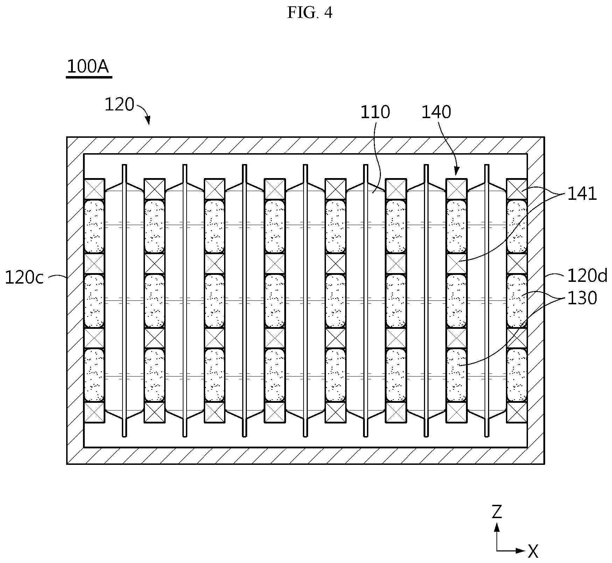

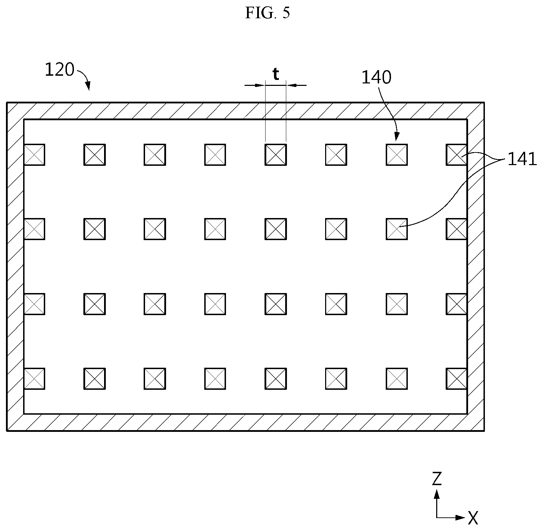

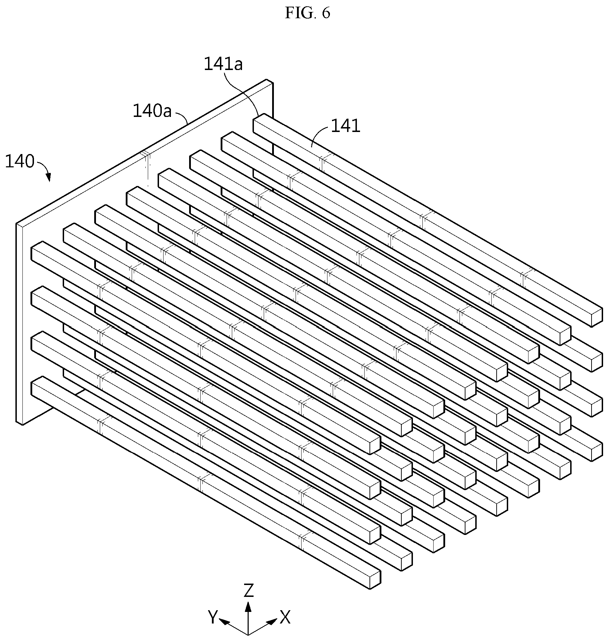

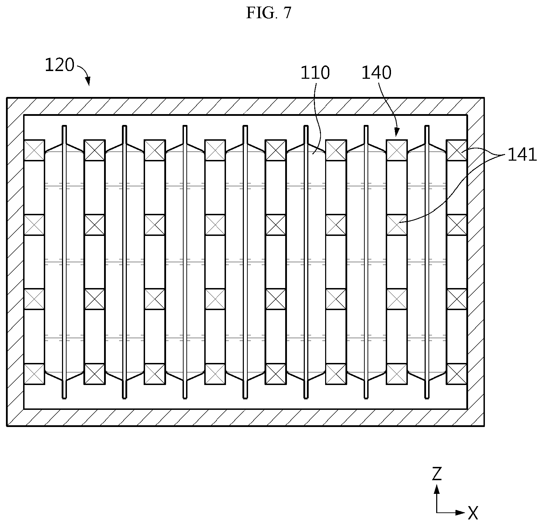

FIG. 4 is a vertical cross-sectional view illustrating a battery module according to Embodiment 2 of the present disclosure. FIG. 5 is a vertical cross-sectional view illustrating a cell frame of the battery module according to Embodiment 2 of the present disclosure. FIG. 6 is a perspective view illustrating a guide member of the battery module according to Embodiment 2 of the present disclosure. FIG. 7 is a vertical cross-sectional view illustrating a cell frame and a plurality of battery cells of the battery module according to Embodiment 2 of the present disclosure.

Referring to FIGS. 4 through 7, the battery module 100A according to Embodiment 2 of the present disclosure further includes a guide member 140, when compared to the battery module 100 of FIG. 1. Other elements may be the same as those of the battery module 100 of FIG. 1.

In detail, the guide member 140 may guide an arrangement of the plurality of battery cells 110 in the receiving space 121. For example, as shown in FIG. 6, the guide member 140 may include a guide plate 140a and a plurality of guide pins 141. The guide plate 140a may fix the plurality of guide pins 141 to be spaced apart from one another by a certain interval. The guide plate 140a may be connected to an end portion of each of the plurality of guide pins 141. The plurality of guide pins 141 may be spaced apart from one another at regular intervals. For example, as shown in FIG. 5, the plurality of guide pins 141 may be inserted into the receiving space 121 of the cell frame 120, and may be spaced apart by a certain distance from an inner surface of the cell frame 120.

When necessary, the guide pins 141 may remain in the cell frame 120. In this case, the guide plate 140a and the plurality of guide pins 141 may be separated from each other by cutting a connected portion between the guide plate 140a and each of the plurality of guide pins 141. For example, when the plurality of battery cells 110 are located in the receiving space 121 of the cell frame 120, the foam member 130 is filled in a space between the plurality of battery cells 110, the foam member 130 is cured, and then the plurality of battery cells 110 and the plurality of guide pins 141 are fixed by the foam member 130, the plurality of guide pins 141 may be separated from the guide plate 140a.

When necessary, the guide pins 141 may be removed from the cell frame 120. For example, when the plurality of battery cells 110 are located in the receiving space 121 of the cell frame 120 and the foam member 130 is filled in a space between the plurality of battery cells 110, the plurality of guide pins 141 may be discharged (removed) from the cell frame 120 before the filled foam member 130 is cured.

At least one of the plurality of guide pins 141 may be located on one side of the battery cell 110. The guide member 140 may support one side of the battery cell 110. That is, by being supported by the plurality of guide pins 141, the plurality of battery cells 110 may be spaced apart from one another by a certain distance. Also, by being supported by the plurality of guide pins 141, at least some of the plurality of battery cells 110 may be spaced apart by a certain distance from an inner surface of the cell frame 120.

Accordingly, according to the configuration of the present disclosure, because the guide member 140 for guiding an arrangement of the plurality of battery cells 110 is provided, an arrangement of the plurality of battery cells 110 at regular intervals may be easily guided. Accordingly, the manufacturing efficiency of the battery module 100A may be improved. Also, when compared to the battery module of the related art in which a plurality of compressed pad members are located between the plurality of battery cells , in the battery module 100A using the guide member 140 of the present disclosure, because an interval between the plurality of battery cells 110 and an interval between the plurality of battery cells 110 and an inner surface of the receiving space 121 of the cell frame 120 may be constant, a deviation of surface pressure applied by the foam member 130 may be effectively reduced. In the battery module 100A of the present disclosure with a reduced deviation of surface pressure, because a degree of degradation such as deterioration occurring during frequent charging/discharging may be reduced, a lifespan may be effectively extended.

Also, referring back to FIGS. 4 through 7, in a battery module 100A according to Embodiment 2 of the present disclosure, the foam member 130 may be filled in at least one of between the cell frame 120 and the battery cell 110 and between the plurality of battery cells 110. For example, the foam member 130 may be located between the plurality of guide pins 141. Also, the foam member 130 may be located between the battery cell 110 and an inner surface of the receiving space 121 in the receiving space 121 of the cell frame 120.

Accordingly, according to the configuration of the present disclosure, because the foam member 130 is located between the plurality of guide pins 141 and presses the battery cell 110, the movement of the battery cell 110 due to external impact (vibration) applied to the battery module 100A may be reduced and damage due to the external impact may be effectively reduced.

Furthermore, each of the plurality of guide pins 141 may support at least one battery cell 110. For example, a right surface of the guide pin 141 may support a left surface of the battery cell 110, and a left surface of the guide pin 141 may support a right surface of another battery cell 110. Each of the plurality of guide pins 141 may extend across the receiving space 121 of the cell frame 120. The guide pin 141 may have a rectangular pillar shape longitudinally extending in the front-back direction. A thickness t of the guide pin 141 in the left-right direction (X-axis direction) may correspond to an appropriate separation distance between the plurality of battery cells 110. That is, a separation distance between the plurality of battery cells 110 may be set according to the thickness t of the guide pin 141. The guide pin 141 may include a hard material. For example, the guide pin 141 may include an electrically insulating plastic material. For example, the guide pin 141 may include polyethylene terephthalate.

Accordingly, according to the configuration of the present disclosure, because the plurality of guide pins 141 are provided, the plurality of guide pins 141 may guide the plurality of battery cells 110 to be arranged at certain intervals. Accordingly, the manufacturing efficiency of the battery module 100A may be improved. Also, when compared to the battery module of the related art in which a plurality of compressed pad members are located between the plurality of battery cells, in the battery module 100A using the guide pin 141 of the present disclosure, because an interval between the plurality of battery cells 110 and an interval between the plurality of battery cells 110 and an inner surface of the receiving space 121 of the cell frame 120 may be constant, a deviation of surface pressure applied by the foam member 130 to the plurality of battery cells 110 may be effectively reduced. In the battery module 100A of the present disclosure with a reduced deviation of surface pressure, because a degree of degradation such as deterioration occurring during frequency charging/discharging may be reduced, a lifespan of the battery module may be prevented from being rapidly shortened when a lifespan of any one of the plurality of battery cells 110 is shortened too fast.

The present disclosure provides a method of manufacturing the battery module 100A.

Referring to FIGS. 4 through 7 together with FIG. 2, a method of manufacturing the battery module 100A of the present disclosure includes a preparation process of preparing the cell frame 120 in which the plurality of guide pins 141 of the guide member 140 are spaced apart from one another in the receiving space 121 in which the plurality of battery cells 110 are accommodated, an accommodation process of accommodating the plurality of battery cells 110 in the receiving space 121 so that each of the plurality of battery cells 110 is located between the plurality of guide pins 141, and an addition process of filling the foam member 130 in at least one of between the cell frame 120 and the battery cell 110 and between the plurality of battery cells 110.

In the preparation process of preparing the cell frame 120, the plurality of guide pins 141 may be arranged in the receiving space 121 of the cell frame 120 to be spaced apart from one another by a certain distance. For example, the plurality of guide pins 141 may be spaced apart from one another in the X-axis direction at regular intervals. At least a portion of the plurality of guide pins 141 may be fixed to the cell frame 120.

In the accommodation process of accommodating the plurality of battery cells 110, each of the plurality of battery cells 110 may be inserted into a space between the plurality of guide pins 141 that are spaced apart in the X-axis direction. Each of the plurality of guide pins 141 may be in close contact with the battery cell 110 to support a side or the other side of the battery cell 110.

In the addition process of filling the foam member 130, a liquid foamable synthetic resin (not shown) having high fluidity may be applied (injected) into the receiving space 121 of the cell frame 120. In this case, the foamable synthetic resin may be injected by using an injector (not shown) including a nozzle. The injected foamable synthetic resin may swell to have a spherical, semispherical, or polygonal cellular structure, and then may be cured to have a foam shape. For example, the foam member 130 may swell to fill a space between the plurality of battery cells 110. The battery module 100A as shown in FIG. 4 may be manufactured through the above manufacturing method.

However, a shape of the foam member 130 is not necessarily limited thereto, and in another embodiment, the foam member 130 may be filled in a space between the guide pins 141 and the foam member 130 may also surround an outer surface of the guide pin 141. In this case, because the foam member 130 surrounds the outer surface of the guide pin 141, the guide pin 141 does not directly contact the battery cell 110, thereby preventing damage to the battery cell 110 due to the guide pin 141.

Accordingly, according to the configuration of the present disclosure, in the manufacturing method of the present disclosure, because the plurality of battery cells 110 may be arranged at regular separation distances by using the plurality of guide members 140, a deviation of surface pressure applied by the foam member 130 may be effectively reduced. In the battery module 100A (see FIG. 4) of the present disclosure with a reduced deviation of surface pressure applied to the battery cell 110 manufactured by using the manufacturing method, because a degree of degradation such as deterioration occurring during frequent charging/discharging may be reduced, a lifespan of the battery module may be prevented from being rapidly shortened when a lifespan of any one of the plurality of battery cells 110 is shortened too fast.

Also, the method of manufacturing the battery module 100 according to Embodiment 1 of the present disclosure further includes, after the addition process, a process of removing the plurality of guide members 140 from the cell frame 120. For example, the plurality of guide pins 141 may be detached from the cell frame 120 by releasing a state where the plurality of guide pins 141 are fixed to the cell frame 120. That is, when the plurality of guide members (guide pins) are removed in this way, the battery module 100 as shown in FIG. 2 may be manufactured.

Accordingly, according to the configuration of the present disclosure, because the plurality of battery cells 110 are fixed in position by the foam member 130, and then the plurality of guide members 140 that support the plurality of battery cells 110 are removed, a weight of the battery module 100 may be reduced, an inner space of the cell frame 120 may be secured, and an increase in surface pressure due to swelling of the plurality of battery cells 110 may be reduced.

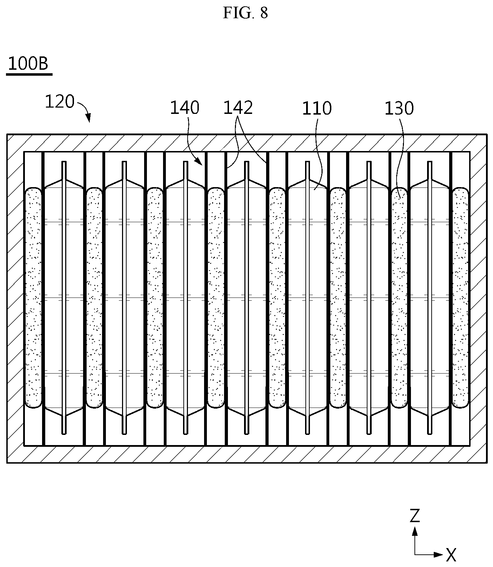

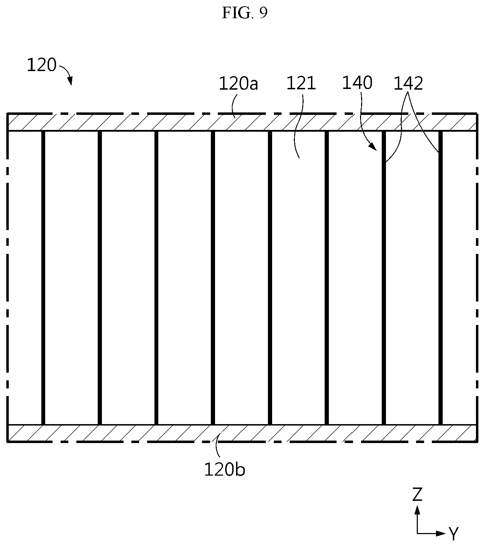

FIG. 8 is a vertical cross-sectional view illustrating a battery module according to Embodiment 3 of the present disclosure. FIG. 9 is a vertical cross-sectional view illustrating a cell frame of the battery module according to Embodiment 3 in a front-back direction.

Referring to FIGS. 8 and 9, a battery module 100B according to Embodiment 3 of the present disclosure may include a plurality of strings 142 as the guide member 140. In detail, each of the plurality of strings 142 may support at least one battery cell 110. The plurality of strings 142 may extend across the receiving space 121 of the cell frame 120. The plurality of strings 142 may be spaced apart from one another by a certain distance. Both end portions (upper end lower end) of the plurality of strings 142 may be fixed to an inner surface of the receiving space 121 of the cell frame 120. For example, an upper end and a lower end of each of the plurality of strings 142 may be respectively fixed to a bottom surface of the first plate portion 120a and a top surface of the second plate portion 120b of the cell frame 120. The plurality of strings 142 may support a surface of the battery cell 110. For example, as shown in FIG. 8, the plurality of strings 142 may be located on a left side of each of the plurality of battery cells 110 and the plurality of strings 142 may also be located on a right side of each of the plurality of battery cells 110. The plurality of strings 142 located on the left side may support a left surface of the battery cell 110. The plurality of strings 142 located on the right side may support a right surface of the battery cell 110.

Also, the plurality of strings 142 may be a plurality of ropes including synthetic fiber bundles. However, the present disclosure is not limited thereto, and the plurality of strings 142 may be formed of a rubber material whose length increases or decreases elastically.

Accordingly, according to the configuration of the present disclosure, because the plurality of strings 142 are provided as the guide member 140, an arrangement of the plurality of battery cells 110 at regular intervals may be guided, a volume and a weight occupied by the plurality of strings 142 may not be large, and thus, a decrease in energy density of the battery module 100B may be reduced due to the plurality of strings 142. Also, because the plurality of strings 142 may elastically buffer surface pressure caused by swelling of the plurality of battery cells 110, a decrease in the performance of the battery cells 110 due to a rapid increase in surface pressure of the battery cells 110 may be effectively prevented.

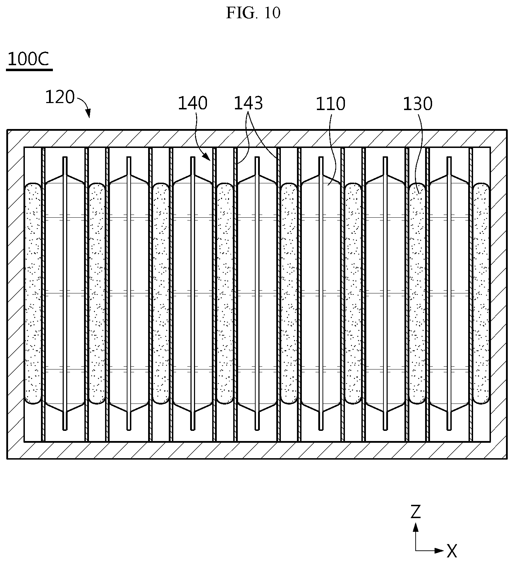

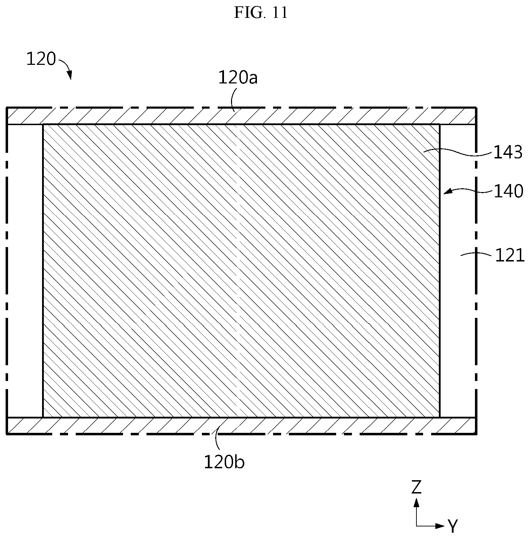

FIG. 10 is a vertical cross-sectional view illustrating a battery module according to Embodiment 4 of the present disclosure. FIG. 11 is a vertical cross-sectional view illustrating a cell frame of the battery module according to Embodiment 4 of the present disclosure in a front-back direction.

In FIGS. 10 and 11, the battery module 100C according to Embodiment 4 of the present disclosure may include a plurality of insulating films 143 as the guide member 140. For example, each of the insulating films 143 may include an electrically insulating polymer film. In more detail, the insulating film 143 may be a polyethylene film.

Also, each of the plurality of insulating films 143 may support the battery cell 110. The plurality of insulating films 143 may extend across the receiving space 121 of the cell frame 120. The plurality of insulating films 143 may be spaced apart from one another by a certain distance. Both end portions (upper end and lower end) of the plurality of insulating films 143 may be fixed to an inner surface of the receiving space 121 of the cell frame 120. For example, an upper end and a lower end of the insulating film 143 may be respectively fixed to a bottom surface of the first plate portion 120a and a top surface of the second plate portion 120b of the cell frame 120. The insulating film 143 may support a surface of the battery cell 110. For example, as shown in FIG. 10, the insulating film 143 may be located on a left side of each of the plurality of battery cells 110, located on a right side of each of the plurality of battery cells 110, or located on both a left side and a right side of each of the plurality of battery cells 110. The insulating film 143 located on the left side may support a left surface of the battery cell 110. The insulating film 143 located on the right side may support a right surface of the battery cell 110.

Accordingly, according to the configuration of the present disclosure, because the plurality of insulating films 143 are provided as the guide member 140, a volume and a weight occupied by the plurality of insulating films 143 may not be large and thus, a decrease in energy density of the battery module 100C may be reduced due to the plurality of insulating films 143. Also, when the insulating film 143 is formed of a flexible material such as a polyethylene film, because the insulating film 143 may buffer surface pressure caused by swelling of the plurality of battery cells 110, a decrease in the performance of the battery cells 110 due to a rapid increase in surface pressure of the battery cells 110 may be effectively prevented.

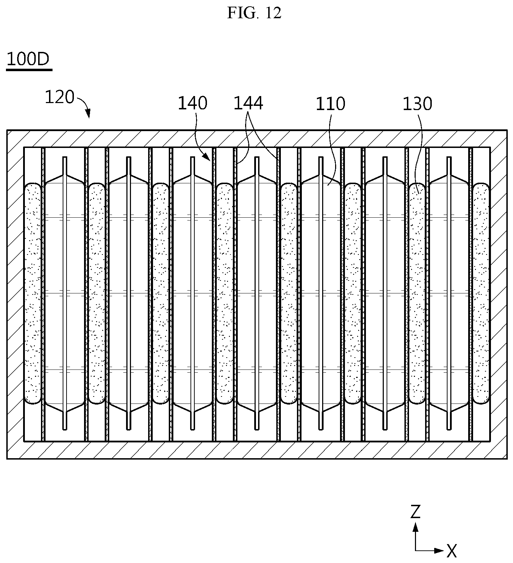

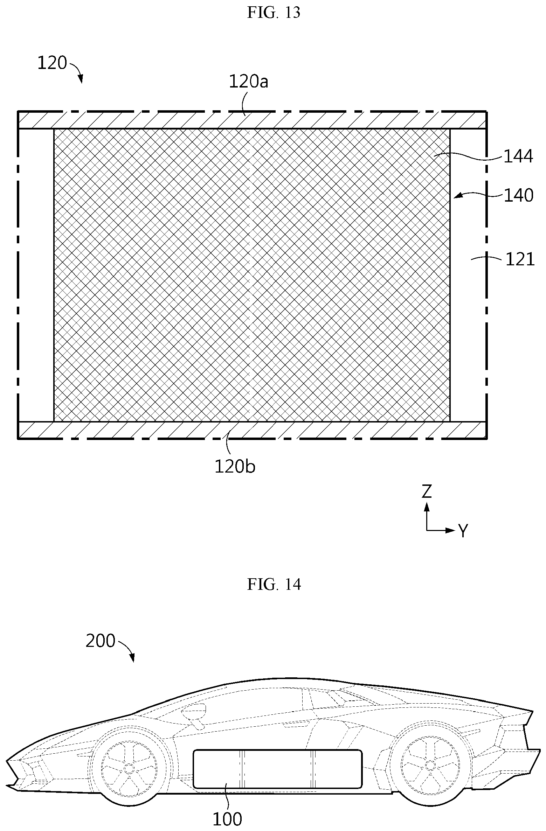

FIG. 12 is a vertical cross-sectional view illustrating a battery module according to Embodiment 5 of the present disclosure. FIG. 13 is a vertical cross-sectional view illustrating a cell frame of the battery module according to Embodiment 5 of the present disclosure in a front-back direction.

Referring to FIGS. 12 and 13, the battery module 100D according to Embodiment 5 of the present disclosure may include a plurality of mesh sheets 144 as the guide member 140. In detail, each of the plurality of mesh sheets 144 may support the battery cell 110. The plurality of mesh sheets 144 may extend across the receiving space 121 of the cell frame 120. The plurality of mesh sheets 144 may be spaced apart from one another by a certain distance. Both end portions (upper end and lower end) of the plurality of mesh sheets 144 may be fixed to an inner surface of the receiving space 121 of the cell frame 120. For example, an upper end and a lower end of the mesh sheet 144 may be respectively fixed to a bottom surface of the first plate portion 120a and a top surface of the second plate portion 120b of the cell frame 120. The mesh sheet 144 may support a surface of the battery cell 110. For example, as shown in FIG. 12, the mesh sheet 144 may be located on a left side of each of the plurality of battery cells 110 and the mesh sheet 144 may be located on a right side of each of the plurality of battery cells 110. The mesh sheet 144 located on the left side may support a left surface of the battery cell 110. The mesh sheet 144 located on the right side may support a right surface of the battery cell 110.

Accordingly, according to the configuration of the present disclosure, because the plurality of mesh sheets 144 are provided as the guide member 144, a volume and a weight occupied by the plurality of mesh sheets 144 may not be large, and thus, a decrease in energy density of the battery module 100D may be reduced due to the plurality of mesh sheets 144. Also, because the mesh sheet 144 may buffer surface pressure caused by swelling of the plurality of battery cells 110, a decrease in the performance of the battery cells 110 due to a rapid increase in surface pressure of the battery cells 110 may be effectively reduced.

A battery pack (not shown) according to an embodiment of the present disclosure may further include various devices (not shown) for controlling charging and discharging of the battery module 100, for example, a battery management system (BMS) module, a current sensor, and a fuse.

FIG. 14 is a side view illustrating an appearance of a vehicle according to Embodiment 6 of the present disclosure.

Referring to FIG. 14, the battery module 100 according to an embodiment of the present disclosure may be included in a vehicle 200 such as an electric vehicle or a hybrid vehicle. That is, the battery module 100 may be mounted in a vehicle body of the vehicle 200 according to an embodiment of the present disclosure.

It will be understood by one of ordinary skill in the art that when terms indicating directions such as upper, lower, left, right, front, and rear are used, these terms are only for convenience of explanation and may vary according to a position of a target object, a position of an observer, etc.

### [Reference Signs]

| | | | |
|---|---|---|---|
| 100, 100A, 100B, 100C, 100D: | battery module | | |
| 110: | battery cell | | |
| 120: | cell frame | 130: | foam member |
| 140: | guide member | 140a: | guide plate |
| 141: | guide pin | | |
| 142: | string | 143: | insulating film |
| 144: | mesh sheet | 121: | receiving space |
| 120a, 120b, 120c, 120d: | first plate portion, second plate portion, third plate portion, fourth plate portion | | |
| 200: | vehicle | | |

## Claims

1. A battery module (100, 100A, 100B, 100C, 100D) comprising:
a plurality of battery cells (110) arranged in at least one direction and spaced apart from one another by a certain interval;
a cell frame (120) comprising a receiving space (121) in which the plurality of battery cells (110) are accommodated;
a foam member (130) filled in at least one of between the cell frame (120) and the plurality of battery cells (110) and between the plurality of battery cells (110); and
a guide member (140) located on and supporting one side of the battery cell (110) to guide an arrangement of the plurality of battery cells (110) in the receiving space (121) such that the plurality of battery cells (110) is spaced apart from one another by a certain interval.

2. The battery module according to claim 1, wherein the foam member (130) is filled in at least one of between the cell frame (120) and the battery cell (110) and between the plurality of battery cells (110).

3. The battery module according to claim 1, wherein the guide member (140) comprises a plurality of guide pins (141) each supporting at least one battery cell (110) and extending across the receiving space (121) of the cell frame (120).

4. The battery module according to claim 1, wherein the guide member (140) comprises a plurality of strings (142) each supporting at least one battery cell (110) and extending across the receiving space (121) of the cell frame (120).

5. The battery module according to claim 1, wherein the guide member (140) comprises an insulating film (143) supporting the battery cell (110) and extending across the receiving space (121) of the cell frame (120).

6. The battery module according to claim 1, wherein the guide member (140) comprises a mesh sheet (144) supporting at least one battery cell (110) and extending across the receiving space (121) of the cell frame (120).

7. A battery pack comprising at least one battery module (100, 100A, 100B, 100C, 100D) according to any one of claims 1 through 6.

8. A vehicle (200) comprising at least one battery module (100, 100A, 100B, 100C, 100D) according to any one of claims 1 through 6.

9. A method of manufacturing the battery module (100, 100A, 100B, 100C, 100D) according to any one of claims 3 through 6, the method comprising:
a preparation process of preparing a cell frame (120) in which a plurality of guide pins (141) of a guide member (140) are spaced apart from one another in a receiving space (121) in which a plurality of battery cells (110) are accommodated;
an accommodation process of accommodating the plurality of battery cells (110) in the receiving space (121) so that each of the plurality of battery cells (110) is located between the plurality of guide pins (141); and
an addition process of filling a foam member (130) in at least one of between the cell frame (120) and the battery cell (110) and between the plurality of battery cells (110).

10. The method according to claim 9, further comprising, after the addition process, a process of removing the guide member (140) from the cell frame (120).

## Patentansprüche

1. Batteriemodul (100, 100A, 100B, 100C, 100D) aufweisend:
mehrere Batteriezellen (110), die in mindestens einer Richtung angeordnet und um ein bestimmtes Intervall voneinander beabstandet sind;
einen Zellenrahmen (120), der einen Aufnahmeraum (121) aufweist, in dem die mehreren Batteriezellen (110) aufgenommen sind;
ein Schaumelement (130), das zwischen dem Zellenrahmen (120) und den mehreren Batteriezellen (110) und/oder zwischen den mehreren Batteriezellen (110) eingefüllt ist; und
ein Führungselement (140), das auf einer Seite der Batteriezelle (110) angeordnet ist und diese stützt, um eine Anordnung der mehreren Batteriezellen (110) in dem Aufnahmeraum (121) derart zu führen, dass die mehreren Batteriezellen (110) um ein bestimmtes Intervall voneinander beabstandet sind.

2. Batteriemodul nach Anspruch 1, wobei das Schaumelement (130) zwischen dem Zellenrahmen (120) und der Batteriezelle (110) und/oder zwischen den mehreren Batteriezellen (110) eingefüllt ist.

3. Batteriemodul nach Anspruch 1, wobei das Führungselement (140) mehrere Führungsstifte (141) aufweist, die jeweils mindestens eine Batteriezelle (110) stützen und sich quer durch den Aufnahmeraum (121) des Zellenrahmens (120) erstrecken.

4. Batteriemodul nach Anspruch 1, wobei das Führungselement (140) mehrere Stränge (142) aufweist, die jeweils mindestens eine Batteriezelle (110) stützen und sich quer durch den Aufnahmeraum (121) des Zellenrahmens (120) erstrecken.

5. Batteriemodul nach Anspruch 1, wobei das Führungselement (140) einen Isolierfilm (143) aufweist, der die Batteriezelle (110) stützt und sich quer durch den Aufnahmeraum (121) des Zellenrahmens (120) erstreckt.

6. Batteriemodul nach Anspruch 1, wobei das Führungselement (140) eine Gitterplatte (144) aufweist, die mindestens eine Batteriezelle (110) stützt und sich quer durch den Aufnahmeraum (121) des Zellenrahmens (120) erstreckt.

7. Batteriepack aufweisend mindestens ein Batteriemodul (100, 100A, 100B, 100C, 100D) nach einem der Ansprüche 1 bis 6.

8. Fahrzeug (200) aufweisend mindestens ein Batteriemodul (100, 100A, 100B, 100C, 100D) nach einem der Ansprüche 1 bis 6.

9. Verfahren zum Herstellen des Batteriemoduls (100, 100A, 100B, 100C, 100D) nach einem der Ansprüche 3 bis 6, wobei das Verfahren umfasst:
einen Vorbereitungsprozess zum Vorbereiten eines Zellenrahmens (120), in dem mehrere Führungsstifte (141) eines Führungselements (140) in einem Aufnahmeraum (121), in dem mehrere Batteriezellen (110) aufgenommen sind, voneinander beabstandet sind;
einen Aufnahmeprozess zum Aufnehmen der mehreren Batteriezellen (110) in dem Aufnahmeraum (121), so dass jede der mehreren Batteriezellen (110) zwischen den mehreren Führungsstiften (141) angeordnet ist; und
einen Hinzufügeprozess zum Einfüllen eines Schaumelements (130) zwischen dem Zellenrahmen (120) und der Batteriezelle (110) und/oder zwischen den mehreren Batteriezellen (110).

10. Verfahren nach Anspruch 9, das ferner nach dem Hinzufügeprozess einen Prozess des Entfernens des Führungselements (140) von dem Zellenrahmen (120) umfasst.

## Revendications

1. Module de batterie (100, 100A, 100B, 100C, 100D) comprenant :
une pluralité de cellules de batterie (110) agencées dans au moins une direction, et espacées les unes des autres par un certain intervalle ;
un cadre de cellule (120) comprenant un espace récepteur (121) dans lequel est installée la pluralité de cellules de batterie (110) ;
un élément en mousse (130) dont on a rempli au moins un des espaces suivants : entre le cadre de la cellule (120) et la pluralité de cellules de batterie (110), et entre la pluralité de cellules de batterie (110) ; et
un élément de guidage (140) situé sur un côté de la cellule de batterie (110), et le supportant, pour guider un agencement de la pluralité de cellules de batterie (110) dans l'espace récepteur (121), de sorte que la pluralité de cellules de batterie (110) soient espacées les unes des autres par un certain intervalle.

2. Module de batterie selon la revendication 1, l'élément en mousse (130) étant rempli dans au moins un des espaces suivants: entre le cadre de cellule (120) et la cellule de batterie (110), et entre la pluralité de cellules de batterie (110).

3. Module de batterie selon la revendication 1, l'élément de guidage (140) comprenant une pluralité de broches de guidage (141) supportant chacune au moins une cellule de batterie (110), et s'étendant à travers l'espace récepteur (121) du cadre de cellule (120).

4. Module de batterie selon la revendication 1, l'élément de guidage (140) comprenant une pluralité de cordes (142) supportant chacune au moins une cellule de batterie (110), et s'étendant à travers l'espace récepteur (121) du cadre de cellule (120).

5. Module de batterie selon la revendication 1, l'élément de guidage (140) comprenant un film isolant (143) supportant la cellule de batterie (110), et s'étendant à travers l'espace récepteur (121) du cadre de cellule (120).

6. Module de batterie selon la revendication 1, l'élément de guidage (140) comprenant une feuille maillée (144) supportant au moins une cellule de batterie (110), et s'étendant à travers l'espace récepteur (121) du cadre de cellule (120).

7. Bloc-batterie comprenant au moins un module de batterie (100, 100A, 100B, 100C, 100D) selon une quelconque des revendications 1 à 6.

8. Véhicule (200) comprenant au moins un module de batterie (100, 100A, 100B, 100C, 100D) selon une quelconque des revendications 1 à 6.

9. Procédé de fabrication du module de batterie (100, 100A, 100B, 100C, 100D) selon une quelconque des revendications 3 à 6, le procédé comprenant:
un procédé de préparation comportant la préparation d'un cadre de cellule (120) dans lequel une pluralité de broches de guidage (141) d'un élément de guidage (140) sont espacées les unes des autres dans un espace récepteur (121) contenant une pluralité de cellules de batterie (110) ;
un procédé de réception consistant à recevoir la pluralité de cellules de batterie (110) dans l'espace récepteur (121) de sorte que chacune de la pluralité de cellules de batterie (110) soit située entre la pluralité de broches guides (141) ; et
un procédé d'adjonction consistant à remplir d'un élément de mousse (130) au moins un de l'espace entre le cadre de la cellule (120) et la cellule de batterie (110), et de l'espace entre la pluralité de cellules de batterie (110).

10. Procédé selon la revendication 9, comprenant en outre, après le procédé d'adjonction, un procédé d'enlèvement de l'élément de guidage (140) du cadre de cellule (120).
